# EUROPÄISCHE PATENTSCHRIFT

(11) **EP 0 779 842 B1**
(45) Veröffentlichungstag und Bekanntmachung des Hinweises auf die Patenterteilung: **03.06.1998**
(21) Anmeldenummer: 95931993.0
(22) Anmeldetag: 05.09.1995
(51) Int. Cl.: B05B 15/12, B01D 45/10

(54) **NASSABSCHEIDER**
SCRUBBER
TOUR DE LAVAGE

(30) Priorität: 07.09.1994 DE 4431893
(43) Veröffentlichungstag der Anmeldung: 25.06.1997
(73) Patentinhaber: ABB FLÄKT AB, S-120 86 Stockholm (SE)
(72) Erfinder: MILOJEVIC, Dragoslav, D-35510 Butzbach (DE)
(74) Vertreter: Füchsle, Klaus, Dipl.-Ing.
(86) Internationale Anmeldenummer: EP9503489
(87) Internationale Veröffentlichungsnummer: WO9607485

(56) Entgegenhaltungen:
- DE-A- 2 316 855
- DE-A- 4 303 753
- FR-A- 2 513 898
- GB-A- 2 156 238
- GB-A- 2 217 225
- US-A- 2 906 511
- US-A- 3 795 093
- US-A- 4 608 064
- US-A- 4 612 025
- US-A- 5 100 442
- US-A- 5 336 283

## Beschreibung

Die Erfindung betrifft einen Naßabscheider zum Reinigen von mit Partikeln verunreinigter Abluft aus einem Arbeitsraum, und insbesondere zum Reinigen von Abluft mit Lackpartikeln aus einer Lackierspritzkabine, nach dem Oberbegriff des Patentanspruchs 1.

Bei derartigen herkömmlichen Naßabscheidern, die z.B. unterhalb eines Bodenrostes einer Lackierspritzkabine angeordnet sind, wird die Abluft einem Einlaufbereich eines Strömungskanals zugeführt. Im Strömungskanal, in dem die Strömungsparameter wie z.B. Geschwindigkeit und Druck durch eine entsprechende Querschnittsgestaltung in bekannter Weise gesteuert werden, erfolgt dann eine Umlenkung der Strömung in eine Richtung quer zur ursprünglichen generellen Einströmrichtung im Einlaufbereich. Die Strömung wird dann einer Austrittsdüse zugeführt, an der eine Vermischung der Abluft mit einer Flüssigkeit stattfindet, die, an den Kanalwänden entlangrinnend, in den Strömungskanal eingeleitet wird. In der Regel ist an der Austrittsdüse eine abrupte Einschnürung des Querschnitts vorgesehen, um eine intensive Vermischung der z.B. mit Lackpartikeln beladenen Abluft mit der Flüssigkeit zu erzielen. Dabei lagern sich die in der Abluft befindlichen Partikel, wie z.B. Lackpartikel und Flüssigkeitströpfchen, aneinander, so daß diese aus der Abluft abgeschieden werden können. Die Austrittsdüse mündet hierzu in eine Kammer, in der sich ein Flüssigkeitsbad befindet.

Bei herkömmlichen Naßabscheidern ist in dieser Kammer im Abstand gegenüber der Austrittsdüse eine Prallwand angeordnet, gegen die ein Großteil des Gemisches aus Abluft, Flüssigkeit und zusammengeballten Partikeln geschleudert wird, bevor die Flüssigkeit und die Partikel entlang der Prallwand in das Flüssigkeitsbad rinnen. Beim Auftreffen des aus der Austrittsdüse austretenden Gemisches an der Prallwand kommt es jedoch zu einer erheblichen unerwünschten Schaumbildung, insbesondere falls schaumbildende Bestandteile in der Flüssigkeit vorhanden sind, die in den strömungskanal eingeleitet wird.

Aus der GB-A-22 17 225 ist ein Zyklon-Abscheider für Sprühnebel enthaltendes Gas bekannt. Bei diesem ZyklonAbscheider ist keine Venturidüse mit einer abrupten Querschnittsverringerung vorgesehen, sondern an den Einlauf in den Abscheider schließt sich eine konkave Führungsfläche an, um eine Abscheidung der Sprühnebelteilchen durch Zentrifugalabscheidung zu bewirken.

Ein derartiger Zyklon-Abscheider, der keine Venturidüse mit einer abrupten Querschnittsverringerung aufweist, sondern am Einlauf in den Abscheider eine konkave Führungsfläche besitzt, um ein Abscheiden der Sprühnebelteilchen durch Zentrifugalabscheidung zu bewirken, ist auch aus der GB-A-2 156 238 bekannt.

Auch die FR-A-2 513 898 betrifft einen Zyklon-Abscheider für Sprühnebel enthaltendes Gas. Das zu den zuvor beschriebenen Zyklon-Abscheidern Gesagte trifft auch auf die hieraus bekannte Reinigungsvorrichtung zu.

Zyklon-Abscheider, wie sie in den zuvor genannten drei Druckschriften offenbart sind, weisen im Gegensatz zu einem erfindungsgemäßen Naßabscheider mit Venturidüse einen relativ niedrigen Abscheidewirkungsgrad bei kleinen Partikeln auf. Die in den Abscheiderkonfigurationen der vorgenannten drei Druckschriften enthaltenen konkaven Führungsflächen dienen dort der eigentlichen Abscheidung der Partikel aus der Abluft, während der Abscheidevorgang bei einem Naßabscheider gemäß der Erfindung infolge einer intensiven Vermischung der mit Partikeln beladenen Abluft und der eingeleiteten Flüssigkeit im Bereich der Austrittsdüse erfolgt.

Ein Naßabscheider des Venturi-Typs ist aus der US-A-5 336 283 bekannt. Der hierin gezeigte Strömungskanal ist in seinem Querschnittsverlauf durch zwei gegenüberliegende Kanalwände festgelegt. Der gezeigte Strömungskanal weist einen Einlaufbereich auf, in den die verunreinigte Abluft einströmt. An einer der Kanalwände rinnt eine Flüssigkeit entlang. Stromabwärts endet der Strömungskanal in einer Austrittsdüse, die quer zur generellen Einströmrichtung in den Einlaufbereich verläuft und zwischen einem oberen und einem unteren Kanalwandabschnitt gebildet ist. Im Bereich des Austrittsquerschnitts der Austrittsdüse ist eine abrupte Querschnittsverringerung vorgesehen. Der obere Kanalwandabschnitt endet in einer senkrecht nach oben gerichteten Wandfläche. An dem unteren Kanalwandabschnitt ist nach der abrupten Querschnittsverringerung ein gerades Flächenstück zu erkennen, das in einem sehr kurzen, im wesentlichen horizontal verlaufenden Wandabschnitt oder in einem um 90° abknickenden Wandabschnitt, der wiederum sehr kurz ausfällt, endet.

Der aus der US-A-5 100 442 bekannte Naßabscheider ist mit einem Strömungskanal gemäß dem Oberbegriff des Patentanspruchs 1 und den weiteren Merkmalen nach dem Oberbegriff versehen. Die abrupte Querschnittsverringerung wird jedoch sowohl durch eine Abknickung am oberen Kanalwandabschnitt, wie auch am unteren Kanalwandabschnitt erzielt. Nach der hierdurch gebildeten, mit einer abrupten Querschnittsverringerung versehenen Austrittsdüse ist das austretende Gemisch aus mit Lackpartikeln und anderen Partikeln verunreinigter Abluft mit der Flüssigkeit ungeführt

Schließlich ist aus der DE-A-33 17 230 ein Naßabscheider nach dem Oberbegriff des Anspruchs 1 bekannt. Der hierin beschriebene Naßabscheider endet stromabwärts der Austrittsdüse am oberen Kanalwandabschnitt direkt hinter dem Bereich, wo die abrupte Querschnittsverringerung vorgesehen ist. Hierbei kommt es jedoch immer noch zu einer stärkeren Schaumbildung im Anschluß an die Abscheidung der Partikel aus der Abluft.

Das der Erfindung zugrundeliegende technische Problem der Erfindung besteht darin, die Schaumbildung im Anschluß an die Abscheidung der Partikel aus der Abluft zu verringern.

Dieses Problem wird erfindungsgemäß von einem Naßabscheider mit den Merkmalen des Patentanspruchs 1 gelöst.

Erfindungsgemäß schließt sich im stromabwärts der Austrittsdüse liegenden Bereich des Naßabscheiders eine Führungswand tangential an den oberen Kanalwandabschnitt der Austrittsdüse an. Dadurch strömt das die Austrittsdüse verlassende Gemisch tangential an der Führungswand entlang. Weiterhin ist erfindungsgemäß im Verlauf der Führungswand zumindest ein gekrümmter Abschnitt vorgesehen, mit dem sich das aus der Austrittsdüse austretende Gemisch aus Abluft, Flüssigkeit und zusammengeballten Partikeln in eine gewünschte Richtung ableiten läßt, z.B. in ein unterhalb der Austrittsdüse befindliches Flüssigkeitsbad.

Die erfindungsgemäße Führungswand ermöglicht eine vorteilhafte Lenkung und Führung des Gemisches aus Abluft, Flüssigkeit und Partikeln sofort im Anschluß an den Strömungsaustritt aus der Austrittsdüse. Durch die tangentiale Fortführung des oberen Kanalfvandabschnitts der Austrittsdüse schmiegt sich die Führungswand optimal an den strömungsverlauf an. So wird vermieden, daß das austretende Gemisch wie im Falle einer herkömmlichen Prallwand in einem steilen Winkel auf eine Wand auftrifft, was eine starke Schaumbildung zur Folge hat. Bei der erfindungsgemäßen Lösung trifft das Gemisch nach Verlassen der Austrittsdüse allenfalls unter einem sehr flachen Winkel auf die sich tangential anschließende Führungswand.

Der erfindungsgemäß im weiteren Verlauf der Führungswand vorgesehene gekrümmte Abschnitt lenkt das Gemisch aus Abluft, Flüssigkeit und Partikeln zum einen sanft in die gewünschte Richtung um und bewirkt zum anderen eine phasentrennung zwischen den festen bzw. flüssigen Bestandteilen und den gasförmigen Bestandteilen des Srömungsgemisches. Diese Phasentrennung resultiert aus den Zentrifugalkräften, die beim Passieren des gekrümmten Abschnitts der Führungswand auf das strömungsgemisch einwirken. Aufgrund der unterschiedlichen physikalischen Dichte der Bestandteile des Gemisches werden die schwereren Bestandteile, d.h. die festen Partikel und die flüssigen Bestandteile, von den leichteren Bestandteilen, also den gasförmigen Bestandteilen, getrennt.

Durch diese Zentrifugalkrafttrennung entlang des gekrümmten Abschnitts der Führungswand wird die Schaumbildung ebenfalls verringert. Zudem ergibt sich der Vorteil, daß der sich dennoch bildende Schaum durch die beschriebene Wirkung der Zentrifugalkrafte abgetrennt wird, so daß der Schaum dann, wenn die Strömung nach Passieren der Führungswand in ein Flüssigkeitsbad gelangt, bereits weitgehend von der Flüssigkeit abgetrennt vorliegt und vergleichsweise leicht aus dem Flüssigkeitsbad abgeschieden werden kann.

Vorzugsweise ist der gekrümmte Abschnitt der Führungswand im Querschnitt bogenförmig. Weitere günstige Ausführungsformen bestehen darin, den gekrümmten Abschnitt im Querschnitt als Kreisbogenabschnitt, Parabelabschnitt, Hyperbelabschnitt oder Ellipsenabschnitt auszubilden.

Weitere günstige Ausführungsformen bestehen darin, den gekrümmten Abschnitt der Führungswand im Querschnitt aus geraden Teilabschnitten zusammengesetzt auszubilden oder den gekrümmten Abschnitt im Querschnitt aus Teilabschnitten mit unterschiedlichen Krümmungsverläufen zusammengesetzt auszubilden.

In zweckmäßigen Ausführungsformen kann sich der gekrümmte Abschnitt der Führungswand entweder unmittelbar an den oberen Kanalwandabschnitt der Austrittsdüse anschließen oder die Führungswand kann einen im Querschnitt geraden Abschnitt zwischen dem oberen Kanalwandabschnitt der Austrittsdüse und dem gekrümmten Abschnitt aufweisen.

Mit den verschiedenen vorangehend beschriebenen Ausführungsformen kann die erfindungsgemäß vorgesehene Führungswand an die vorgegebenen räumlichen Verhältnisse angepaßt werden. Durch einen entsprechenden geometrischen Verlauf der Führungswand kann das Strömungsgemisch vom Austritt aus der Austrittsdüse bis hinein in ein Flüssigkeitsbad geführt werden. Vorzugsweise befindet sich deshalb das stromabwärts gelegene Ende der Führungswand auf Höhe oder unterhalb des Flüssigkeitsspiegels eines Flüssigkeitsbades. Somit ergibt sich eine durchgehende, sanfte Führung des strömungsgemisches zwischen Austrittsdüse und Flüssigkeitsbad, wobei die Schaumbildung aufgrund der tangentialen Anströmung der Führungswand und aufgrund der Zentrifugalkrafttrennung der verschiedenen Phasen im gekrümmten Abschnitt der Führungswand verringert wird.

Bei einer bevorzugten Ausführungsform weist der gekrümmte Abschnitt der Führungswand einen konkaven Bereich auf, der im wesentlichen einem unterhalb der Austrittsdüse befindlichen Abluftbereich zugewandt ist. Auf diese Weise bildet der konkave Bereich der Führungswand einen Reflektorabschnitt, der den im Bereich der Austrittsdüse erzeugten Schall hauptsächlich in den unterhalb der Austrittsdüse gelegenen Abluftbereich reflektiert. Damit wird erreicht, daß der im Bereich der Austrittsdüse erzeugte Schall nicht wieder in die Düse hinein und von dort aus möglicherweise in den Arbeitsraum oberhalb des Naßabscheiders gelenkt wird, sondern in einen unschädlichen Bereich unterhalb der Austrittsdüse, von wo aus der Schall durch weitere Maßnahmen abgeleitet werden kann. So trägt der erfindungsgemäße Naßabscheider in vorteilhafter Weise zu einer Reduzierung des im Arbeitsraum oberhalb des Naßabscheiders herrschenden Geräuschpegels bei, so daß dort erträglichere Arbeitsbedingungen für das Personal geschaffen werden.

Der konkave Bereich des gekrümmten Abschnitts kann dabei nicht nur als Reflektorabschnitt, sondern darüber hinaus als Konzentratorabschnitt wirken und so den aus dem Düsenbereich kommenden Schall in gebündelter Form in eine gewünschte Richtung zur weiteren unschädlichen Abführung lenken.

Der erfindungsgemäße Naßabscheider führt also zu einer verringerten Schaumbildung gegenüber herkömmlichen Naßabscheidern, bei denen der Schaum- bzw. Gasblasengehalt im Flüssigkeitsbad bis zu etwa 50% beträgt. Weiterhin bewirkt der erfindungsgemäße Naßabscheider eine Schallreflektion des im Düsenbereich erzeugten Schalls zum Abluftkanal hin, wo er unschädlich abgeführt wird, und nicht in die Düse zurück, von wo er in den Arbeitsraum gelangen könnte. Schließlich findet beim erfindungsgemäßen Naßabscheider aufgrund der wirkenden Zentrifugalkräfte eine vorteilhafte Phasentrennung der dennoch entstehenden Schaumblasen von den übrigen festen und flüssigen Bestandteilen der Strömung statt.

Nachfolgend wird nun ein Ausführungsbeispiel der Erfindung anhand der beigefügten Zeichnung näher erläutert.

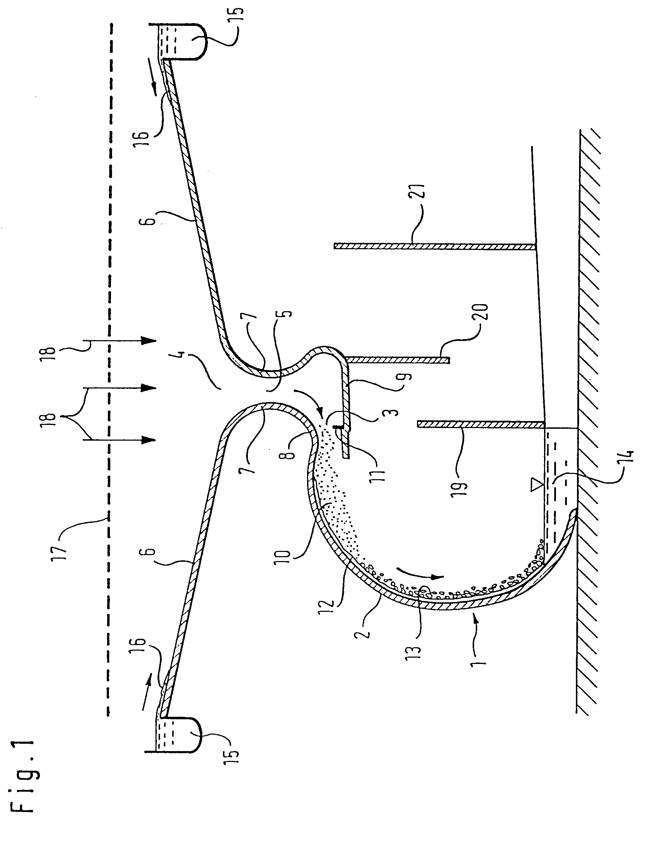

- Fig. 1: zeigt eine Ausführung des erfindungsgemäßen Naßabscheiders im Querschnitt.

Fig. 1 zeigt einen Naßabscheider, der unterhalb einer nicht dargestellten Lackierspritzkabine angeordnet ist. Die mit Lackpartikeln beladene Abluft aus der Lackierspritzkabine strömt durch einen Gitterboden 17 in einer im wesentlichen vertikalen Einströmrichtung, die mit Pfeilen 18 verdeutlicht ist, in den Einlaufbereich 4 des Naßabscheiders 1.

Der trichterförmige Einlaufbereich 4 wird von Leitwänden 6 gebildet. An den freien Enden der beiden Leitwände 6 ist jeweils ein Überlaufbecken 15 angeordnet, das eine Flüssigkeit enthält. Diese Flüssigkeit kann z.B. Wasser sein, das gegebenenfalls mit seifenartigen oder anderen Zusätzen versehen ist. Aus den Überlaufbecken 15 wird, an den Leitwänden 6 entlangrinnend, ein Flüssigkeitsfilm 16 in den Naßabscheider eingeleitet.

An den Einlaufbereich 4 schließt sich ein strömungskanal 5 an, der in seinem Querschnittsverlauf durch zwei gegenüberliegende Kanalwände 7 festgelegt wird. Der strömungskanal 7 weist über seine gesamte Länge, d.h. in Richtung senkrecht zur zeichenebene, einen gleichbleibenden Querschnitt auf. Der strömungskanal 5 gliedert sich stromabwärts in einen Bereich mit abnehmendem Querschnitt, einen sich anschließenden Expansionsbereich sowie einen Umlenkbereich, in dem die Strömung aus ihrer ursprünglichen generellen Einströmrichtung gemäß den Pfeilen 18 in eine dazu quer verlaufende Richtung umgelenkt wird. Schließlich mündet der stromungskanal 5 in eine Austrittsdüse 3, die zwischen einem oberen Kanalwandabschnitt 8 und einem unteren Kanalwandabschnitt 9 gebildet ist. Am Austrittsquerschnitt der Austrittsdüse 3 ist am unteren Kanalwandabschnitt 9 eine abrupte Querschnittsverringerung 11 vorgesehen.

An den oberen Kanalwandabschnitt 8 der Austrittsdüse 3 schließt sich auf Höhe der abrupten Querschnittsverringerung 11, d.h. am Austrittsquerschnitt der Düse, unmittelbar eine Führungswand 1 tangential an. Die Führungswand 1 setzt sich in einem kontinuierlich gekrümmten Abschnitt 2 fort, der schließlich in ein Flüssigkeitsbad 14 einmündet. Das freie Ende der Führungswand 1 taucht dabei in den Flüssigkeitsspiegel des Flüssigkeitsbades 14 ein. Zwischen dem unteren Kanalwandabschnitt 9 der Austrittsdüse 3 und dem Flüssigkeitsbad 14, dessen Flüssigkeitsspiegel unterhalb der Austrittsdüse liegt, ist ein Abluftbereich vorgesehen, der durch Leitflächen 19, 20, 21 festgelegt wird und eine Tropfenabscheidung ermöglicht.

Nachfolgend wird nun die Funktion des in Fig. 1 dargestellten Naßabscheiders erläutert.

Die mit Lackpartikeln beladene Abluft, die gemäß den Pfeilen 18 aus der Lackierspritzkabine einströmt, wird über den Einlaufbereich 4 dem strömungskanal 5 zugeleitet. Dort passiert die mit Lackpartikeln beladene Abluft die verschiedenen Bereiche des Strömungskanals 5 bis zur Austrittsdüse 3. Die in den Einlaufbereich 4 eingeleiteten Flüssigkeitsfilme 16 rinnen an den Kanalwänden 7 entlang und gelangen so ebenfalls in den Bereich der Austrittsdüse 3. Dort kommt es aufgrund der abrupten Querschnittsverringerung 11 zu einer turbulenten Vermischung der mit Lackpartikeln beladenen Abluft und der in den strömungskanal eingeleiteten Flüssigkeit. Durch diese innige Vermischung der Flüssigkeitströpfchen mit der Abluft und den darin befindlichen Lackpartikeln kommt es zu einer Aneinanderlagerung und Zusammenballung der Lackpartikel und Flüssigkeitströpfchen, so daß diese nachfolgend ausgeschieden werden können.

Im weiteren Strömungsverlauf trifft nun das entstandene Gemisch 10 aus Flüssigkeitströpfchen, Abluft und Lackpartikeln nicht wie bei herkömmlichen Naßabscheidern auf eine prallwand auf, von der die Flüssigkeitströpfchen unter entsprechend starker Schaumbildung heftig wegspritzen, sondern das Gemisch 10 wird im Bereich nach der Austrittsdüse 3 sanft an die sich tangential anschließende Führungswand 1 herangeführt. Da das Gemisch allenfalls unter einem sehr flachen Winkel an die Führungswand 1 heranströmt, wird ein Wegspritzen der Flüssigkeitströpfchen von der Führungswand 1 und dem sich daran bildenden Flüssigkeitsfilm 12 weitgehend vermieden, so daß die Schaumbildung reduziert wird.

Durch den bogenförmig gekrümmten Verlauf des Abschnitts 2 der Führungswand 1 wirken Zentrifugalkräfte auf das in pfeilrichtung an der Führungswand 1 entlangrinnende Gemisch 10, so daß sich die schwereren Lackpartikel und Flüssigkeitströpfchen in einem kurvenäußeren Bereich des bogenförmig gekrümmten Abschnitts 2 sammeln, während sich die leichteren Gasblasen in einem kurveninneren Bereich sammeln. Durch diese phasentrennung aufgrund der unterschiedlichen physikalischen Dichte der Bestandteile des Gemisches 10 ergibt sich am gekrümmten Abschnitt 2 der Führungswand 1 also ein kurvenäußerer Flüssigkeitsfilm 12 und ein kurveninnerer schaumblasenfilm 13. Derjenige Schaum, der sich trotz erfolgter Phasentrennung während des Passierens des gekrümmten Abschnitts 2 der Führungswand 1 noch nicht aufgelöst hat, liegt anschließend von der Flüssigkeit getrennt auf der Oberfläche des Flüssigkeitsbades 14 vor.

Weiterhin wird der im Bereich der Austrittsdüse 3 erzeugte Schall vom gekrümmten Abschnitt 2 der Führungswand 1, dessen konkave Seite im wesentlichen auf den Abluftbereich 19, 20, 21 unterhalb der Austrittsdüse 3 gerichtet ist, in unschädlicher Weise zu diesem Abluftbereich hin reflektiert. Der bogenförmig gekrümmte Abschnitt 2 wirkt also als Reflektor und Konzentrator für den austretenden Düsenschall. Nachdem der Schall hauptsächlich von der Düse wegreflektiert wird, wird vermieden, daß der Schall wieder in die Düse hinein und von dort möglicherweise in den Arbeitsraum oberhalb des Naßabscheiders gelangt.

## Patentansprüche

1. Naßabscheider zum Reinigen von mit Partikeln verunreinigter Abluft aus einem Arbeitsraum, insbesondere zum Reinigen von Abluft mit Lackpartikeln aus einer Lackierspritzkabine,
- mit einem Strömungskanal (5), der in seinem Querschnittsverlauf durch zwei gegenüberliegende Kanalwände (7) festgelegt wird, wobei
- der Strömungskanal (5) einen Einlaufbereich (4) aufweist, in den die verunreinigte Abluft einströmt und in den, an den Kanalwänden (7) entlangrinnend, eine Flüssigkeit (16) eingeleitet wird, und wobei
- der Strömungskanal (5) stromabwärts in einer Austrittsdüse (3) endet, die quer zur generellen Einströmrichtung (18) in den Einlaufbereich (4) verläuft und zwischen einem oberen (8) und einem unteren (9) Kanalwandabschnitt gebildet ist, wobei im Bereich des Austrittsquerschnitts der Austrittsdüse (3) eine abrupte Querschnittsverringerung (11) vorgesehen ist,
**dadurch gekennzeichnet,**
daß sich stromabwärts der Austrittsdüse (3) an den oberen Kanalwandabschnitt (8) eine Führungswand (1) tangential anschließt, die in ihrem Verlauf zumindest einen gekrümmten Abschnitt (2) aufweist.

2. Naßabscheider nach AnsPruch 1, **dadurch gekennzeichnet**, daß der gekrümmte Abschnitt (2) der Führungswand (1) im Querschnitt bogenförmig ist.

3. Naßabscheider nach Anspruch 1 oder 2, **dadurch gekennzeichnet,** daß der gekrümmte Abschnitt (2) der Führungswand (1) im Querschnitt ein Kreisbogenabschnitt ist.

4. Naßabscheider nach Anspruch 1 oder 2, **dadurch gekennzeichnet,** daß der gekrümmte Abschnitt (2) der Führungswand (1) im Querschnitt ein Parabel- , Hyperbeloder Ellipsenabschnitt ist.

5. Naßabscheider nach Anspruch 1 oder 2, **dadurch gekennzeichnet,** daß der gekrümmte Abschnitt (2) der Führungswand (1) im Querschnitt aus geraden Teilabschnitten gebildet ist.

6. Naßabscheider nach Anspruch 1 oder 2, **dadurch gekennzeichnet,** daß der gekrümmte Abschnitt (2) der Führungswand (1) im Querschnitt aus Teilabschnitten mit unterschiedlichen Krümmungsverläufen gebildet ist.

7. Naßabscheider nach einem der Ansprüche 1 bis 6, dadurch **gekennzeichnet,** daß sich der gekrümmte Abschnitt (2) der Führungswand (1) unmittelbar an den oberen Kanalwandabschnitt (8) der Austrittsdüse (3) anschließt.

8. Naßabscheider nach einem der Ansprüche 1 bis 6, **dadurch gekennzeichnet,** daß die Führungswand (1) zwischen dem oberen Kanalwandabschnitt (8) der Austrittsdüse (3) und ihrem gekrümmten Abschnitt (2) der Führungswand (1) einen geraden Abschnitt aufweist.

9. Naßabscheider nach einem der Ansprüche 1 bis 8, **dadurch gekennzeichnet,** daß das stromabwärts gelegene Ende der Führungswand (1) sich auf Höhe oder unterhalb des Flüssigkeitsspiegels eines Flüssigkeitsbads (14) befindet.

10. Naßabscheider nach einem der Ansprüche 1 bis 9, **dadurch gekennzeichnet,** daß der gekrümmte Abschnitt (2) der Führungswand (1) einen konkaven Bereich aufweist, der im wesentlichen einem unterhalb der Austrittsdüse (3) befindlichen Abluftbereich (19, 20, 21) zugewandt ist.

## Claims

1. Wet separator for cleaning exhaust air contaminated with particles from a work room, especially for cleaning exhaust air with paint particles from a paint-spraying cubicle
- having a flow duct (5) the course of the cross section of which is determined by two opposite channel walls (7), wherein
- the flow duct (5) has an inlet zone (4) into which the contaminated exhaust air flows and into which a liquid (16) trickling along the channel walls (7) is introduced and wherein
- the flow duct (5) terminates downstream in an outlet nozzle (3) which runs transversely with respect to the general inflow direction (18) into the inlet zone (4) and is formed between an upper (8) and a lower (9) channel wall section, an abrupt reduction (11) in cross section being provided in the region of the outlet cross section of the outlet nozzle (3)
characterised in that
tangentially contiguous with the upper channel wall section (8) downstream of the outlet nozzle (3) is a guide wall (1) which in its course has at least one curved section (2).

2. Wet separator according to claim 1, characterised in that the curved section (2) of the guide wall (1) is arc-shaped in cross section.

3. Wet separator according to Claim 1 or 2, characterised in that the curved section (2) of the guide wall (1) has the cross section of a segment of an arc of a circle.

4. Wet separator according to Claim 1 or 2, characterised in that the curved section (2) of the guide wall (1) has the cross section of a segment of a parabola, hyperbola or ellipse.

5. Wet separator according to Claim 1 or 2, characterised in that the curved section (2) of the guide wall (1) has a cross section formed from straight partial segments.

6. Wet separator according to Claim 1 or 2, characterised in that the curved section (2) of the guide wall (1) has a cross section formed from partial segments having different curvatures.

7. Wet separator according to one of Claims 1 to 6, characterised in that the curved section (2) of the guide wall (1) directly adjoins the upper channel wall section (8) of the outlet nozzle (3).

8. Wet separator according to one of Claims 1 to 6, characterised in that between the upper channel wall section (8) of the outlet nozzle (3) and its curved section (2) of the guide wall (1) the guide wall (1) exhibits a straight section.

9. Wet separator according to one of Claims 1 to 8, characterised in that the end of the guide wall (1) located downstream is located at the level or below of the liquid surface of a liquid bath (14).

10. Wet separator according to one of Claims 1 to 9, characterised in that the curved section (2) of the guide wall (1) has a concave region which essentially faces towards the exhaust air region (19, 20, 21) located below the outlet nozzle (3).

## Revendications

1. Séparateur humide pour la purification d'air d'évacuation pollué par des particules, en provenance d'un local de travail, notamment pour la purification d'air d'évacuation renfermant des particules de peinture en provenance d'une cabine de peinture de pulvérisation, le séparateur comprenant
- un canal d'écoulement (5), dont le tracé de la section transversale est déterminé par deux parois de canal (7) s'étendant l'une en face de l'autre,
- le canal d'écoulement (5) comprenant une zone d'entrée (4) dans laquelle pénètre l'air d'évacuation pollué, et dans laquelle est envoyé un liquide (16) ruisselant le long des parois de canal (7),
- et le canal d'écoulement (5) se terminant en aval par une buse de sortie (3), qui s'étend transversalement à la direction d'écoulement d'entrée générale (18) dans la zone d'entrée (4), et qui est formée entre un tronçon de paroi de canal supérieur (8) et inférieur (9), une réduction de section transversale (11) brutale étant prévue dans la zone de la section transversale de sortie de la buse de sortie (3),
**caractérisé**
en ce qu'en aval de la buse de sortie (3), au tronçon de paroi de canal supérieur (8), se raccorde tangentiellement, une paroi de guidage (1), qui dans son tracé présente au moins un tronçon courbe (2).

2. Séparateur humide selon la revendication 1, **caractérisé** en ce que le tronçon courbe (2) de la paroi de guidage (1) présente une forme d'arc en section transversale.

3. Séparateur humide selon la revendication 1 ou 2, **caractérisé** en ce que le tronçon courbe (2) de la paroi de guidage (1) est un arc de cercle en section transversale.

4. Séparateur humide selon la revendication 1 ou 2, **caractérisé** en ce que le tronçon courbe (2) de la paroi de guidage (1) est un tronçon de parabole, d'hyperbole ou d'ellipse en section transversale.

5. Séparateur humide selon la revendication 1 ou 2, **caractérisé** en ce que le tronçon courbe (2) de la paroi de guidage (1) est formé, en section transversale, de tronçons partiels rectilignes.

6. Séparateur humide selon la revendication 1 ou 2, **caractérisé** en ce que le tronçon courbe (2) de la paroi de guidage (1) est formé, en section transversale, de tronçons partiels de tracé courbe différent.

7. Séparateur humide selon l'une des revendications 1 à 6, **caractérisé** en ce que le tronçon courbe (2) de la paroi de guidage (1) se raccorde directement au tronçon de paroi de canal supérieur (8) de la buse de sortie (3).

8. Séparateur humide selon l'une des revendications 1 à 6, **caractérisé** en ce que la paroi de guidage (1) présente un tronçon rectiligne entre le tronçon de paroi de canal supérieur (8) de la buse de sortie (3) et son tronçon courbe (2) de la paroi de guidage (1).

9. Séparateur humide selon l'une des revendications 1 à 8, **caractérisé** en ce que l'extrémité aval de la paroi de guidage (1), se trouve à hauteur ou en-dessous du niveau de liquide d'un bain de liquide (14).

10. Séparateur humide selon l'une des revendications 1 à 9, **caractérisé** en ce que le tronçon courbe (2) de la paroi de guidage (1) présente une zone concave qui est sensiblement dirigée vers une zone d'air d'évacuation (19, 20, 21) se trouvant sous la buse de sortie (3).
